# EUROPEAN PATENT APPLICATION

(11) **EP 4 650 409 A1**
(43) Date of publication of application: **19.11.2025**
(21) Application number: 24176708.6
(22) Date of filing: 17.05.2024
(51) Int. Cl.: C09J 5/00, B29C 65/48, C08J 5/12, B29C 65/00

(54) **MULTIFUNCTIONAL VITRIMER COMPOSITES**

(71) Applicant: Airbus SAS, 31700 Blagnac Cedex (FR)
(72) Inventor: BEIER, Uwe, 82024 Taufkirchen (DE); METZNER, Christian, 82024 Taufkirchen (DE); ZIMMERMANN, Kristian, 82024 Taufkirchen (DE); HÜBNER, Fabian, 82024 Taufkirchen (DE); MEER, Thomas, 82024 Taufkirchen (DE); KEMPF, Manuel, 86609 Donauwörth (DE); ARANDA GALLARDO, Santiago, 86609 Donauwörth (DE)
(74) Representative: Isarpatent

(57) **Abstract**

The present invention relates to a semi-finished product comprising at least one vitrimer, a method of joining using the semi-finished product with a subcomponent, a component produced by the method, and a method of debonding such component.

## Description

### TECHNICAL FIELD OF THE INVENTION

The present invention relates to a semi-finished product comprising at least one vitrimer, a method of joining using the semi-finished product with a sub-component, a component produced by the method, and a method of debonding such component.

### TECHNICAL BACKGROUND

In aviation, lightweight construction is a crucial element. Minimized structural weight is intrinsic to aviation, enabling challenging missions but also reducing the operator cost by saving fuel and finally contributing to sustainability targets. Composites are nowadays a key facilitator of optimized aircraft weight. However, there are some limitations and drawbacks of current composite technologies, namely high cost, low rate capability, insufficient composite joining technologies and last but not least the relatively high environmental footprint of a composite part itself. The environmental footprint of composites consists of the efforts to produce the raw material, the subsequent manufacturing and recycling processes. The latter can be considered to enable a credit for a second life cycle.

Composite materials for all kinds of aerospace applications are made with reinforcement fibers and a polymeric matrix. The polymeric matrix is either thermoset (TS) or thermoplastic (TP) with both advantages and disadvantages in terms of processing, thermal/mechanical properties, bonding/fusing and recycling. The two polymeric materials differ in their chemical nature.

Thermosets yield highest laminar and interlaminar quality of composites, which is required for structural applications. But the environmental footprint is high due to the extensive curing and consolidation steps, which are usually highly energy demanding, e.g. based on autoclave processes. When manufactured to final shape, bonding or fusing of thermoset is complex, time- and cost demanding due to its insoluble, non-meltable and non-malleable chemical nature. Recycling approaches are non-satisfactory to date, because it requires breaking covalent chemical bonds to recover the monomers, with high energy cost.

Thermoplasts can be recycled comparably easily. However, for high laminar and interlaminar quality, high temperatures are necessary for consolidation. Additionally, the environmental footprint of high performance thermoplastic processing is amongst the highest, particularly also in view of the necessary very high temperature regimes for consolidation. In order to eliminate that energy intensive step, research on in-situ consolidation during automated fiber placement (AFP) processes has been conducted. Due to material specific limitations, particularly diffusion speed of the long chain molecules, the quality achieved is not on an appropriate level required for aviation.

The described processes to manufacture thermoset- and thermoplastic-based composites are not only energetically demanding, but are also time consuming. If highest qualities are required, again autoclave-manufacturing is the process of choice. Additionally, a demand for extensive hand labor for the autoclave bagging occurs.

Analog to the approaches to reduce environmental footprint, in-situ consolidation for thermoplastics are a matter of research. Here the time needed to weld two tapes is contradicting the targeted production speed. The described intrinsic behavior (diffusion speed) is also limiting the speed of macroscopic part joining processes if welding or adhesive bonds are employed.

Today's material and manufacturing processes, for both thermoplastic (TP) and thermoset (TS), get optimized using various technologies. However, detailed studies show that even in a long term perspective there are some limitations, hindering a close to zero environmental footprint.

The special nature of fiber composites are strongly benefiting from specific designs to enable lightweight construction, thereby exploiting the light-weight potential to the next level. Particularly, joining designs are benefitting from shear load designs, which are enabled by welding or adhesive bonding. Both are appropriate for thin-walled structures and a contributor to lightweight design compared to mechanical joining, but are also time / cost consuming and more importantly challenging regarding certification rules in aviation.

In the current literature the polymeric material class "vitrimers", characterized by their reversible covalent bonding networks, e.g. comprising disulfide bonds, are seen as potential enablers of easily recyclable and repairable composites. They can be seen as potential enablers for joining, bonding and thus repair and recycling to target end-of-life issues, i.e. forming the basis for easily recyclable and repairable composites. An example of vitrimers can e.g. be found in US 11713370 B1.

### SUMMARY OF THE INVENTION

All of the above-discussed materials have their advantages and disadvantages. Thus, the inventors aimed at optimizing a semi-finished product that combines advantages of the known materials, using a specific approach of hybridization. The approach of hybridization is very often aimed at conferring the resulting hybrid material with sets of properties which the individual materials cannot provide alone. By means of hybridization, materials can be optimized to satisfy specific requirements.

The inventors developed a semi-finished product or part comprising a vitrimer which particularly in certain embodiments does not require further manufacturing steps such as curing or consolidation in specific embodiments. Specifically, they found that, in order to enable any kind of subsequent joining processes, an active surface made from vitrimer can be used which then can be applied by either covalent binding or sufficient interdiffusion for joining to the semi-finished product or part.

The inventors found that vitrimers, more specifically the hybrids of those, can be exploited in the field of joining. Such joining can be found in macroscopic joining of parts and elements down to mesoscale joining of tapes, e.g. AFP, and microscale joining of filaments, e.g. 3D printing. This leads to:
- reliable & certifiable bonding
- debonding on demand
- cost reduction
- high rate production capability
- reduced environmental footprint.

A first aspect of the invention relates to a semi-finished product, comprising a substrate and at least one first vitrimer covalently bound to the substrate.

Further disclosed is a first method of joining, comprising:
- providing a semi-finished product of the invention;
- bringing the semi-finished product in contact with a sub-component; and
- joining the semi-finished product with the sub-component.

Additionally, the invention relates to a component produced by the first method of joining, and a method of debonding such component.

Also disclosed is a second method of joining, comprising:
- providing a first semi-finished product, comprising a first substrate and at least one first vitrimer covalently bound to the first substrate, and a second semi-finished product, comprising a second substrate and at least one third vitrimer, preferably covalently bound to the second substrate, wherein the first and the second semi-finished product can be the same or different;
- removing the first and third vitrimer from the first and second semi-finished product at least partially;
- bringing the first semi-finished product in contact with the second semi-finished product at least in the region where the first and third vitrimer were removed from the first and second semi-finished product at least partially;
- filling the region where the first and third vitrimer are removed from the first and second semi-finished product at least partially with a resin; and
- curing the resin.

Additionally, the invention relates to a component produced by the second method of joining, which also can be debonded.

Further aspects and embodiments of the invention are disclosed in the dependent claims and can be taken from the following description, figures and examples, without being limited thereto.

### BRIEF SUMMARY OF THE DRAWINGS

The present invention is explained in more detail below with reference to the embodiments shown in the schematic figures:
- Fig. 1: schematic view of an exemplary semi-finished product
- Fig. 2: schematic view of a further exemplary semi-finished product
- Fig. 3: schematic view of another exemplary semi-finished product
- Fig. 4: schematic view of another exemplary semi-finished product
- Fig. 5: schematic view of the basic concept the present semi-finished product is based on
- Fig. 6: schematic view of a method of joining of the invention
- Fig. 7: schematic view of the joining of two semi-finished products
- Fig. 8: schematic view of the joining of a semi-finished product to a subcomponent
- Fig. 9: schematic view of the joining of two semi-finished products using an intermediate material
- Fig. 10: schematic view of a method of debonding of the invention
- Fig. 11: schematic view of another, second method of joining of the invention
- Fig. 12: exemplary overview of resins and vitrimers for the present hybrid concept
- Fig. 13: exemplary joining of a bracket
- Fig. 14: exemplary joining using automated fiber placement

In the figures of the drawing, elements, features and components which are identical, functionally identical and of identical action are denoted in each case by the same reference designations unless stated otherwise.

### DESCRIPTION OF EXEMPLARY EMBODIMENTS

### Definitions

Unless defined otherwise, technical and scientific terms used herein have the same meaning as commonly understood by one of ordinary skill in the art to which this invention belongs.

Before the invention is described in exemplary detail, it is to be understood that this invention is not limited to the particular component parts of the process steps of the methods described herein as such methods may vary. It is also to be understood that the terminology used herein is for purposes of describing particular embodiments only, and is not intended to be limiting. It must be noted that, as used in the specification and the appended claims, the singular forms "a," "an" and "the" include singular and/or plural referents unless the context clearly dictates otherwise. For example, the term "a" as used herein can be understood as one single entity or in the meaning of "one or more" entities. It is also to be understood that plural forms include singular and/or plural referents unless the context clearly dictates otherwise.

As used herein, the terms "comprises", "comprising", "contains", "containing", "includes", "including", "has", "having" or any other variation thereof, are intended to cover a non-exclusive inclusion. For example, a process, method, article, or apparatus that comprises a list of elements is not necessarily limited to only those elements, but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The use of the term "at least one" or "one or more" will be understood to include one as well as any quantity more than one. In addition, the use of the phrase "at least one of X, Y, and Z" will be understood to include X alone, Y alone, and Z alone, as well as any combination of X, Y, and Z.

The use of ordinal number terminology (i.e., "first", "second", "third", "fourth", etc.) is solely for the purpose of differentiating between two or more items and, unless explicitly stated otherwise, is not meant to imply any sequence or order or importance to one item over another or any order of addition.

Finally, as used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

In a first aspect, the present invention relates to a semi-finished product, comprising a substrate and at least one first vitrimer covalently bound to the substrate.

In the semi-finished product, the at least one first vitrimer is not particularly restricted. It is also not excluded that more than one vitrimer is covalently bound to the substrate. According to certain embodiments, only one first vitrimer is bound to the substrates. Suitable vitrimers include e.g. specific epoxy resins e.g. based on diglycidyl ether of bisphenol A, aromatic polyesters, polylactic acid (polylactide), polyhydroxyurethanes, polyimines, polydisulfides, polythioesters, etc. Particularly, aromatic compounds are preferable for a better performance at higher temperature. Furthermore, the vitrimers can be present in monomeric form, as oligomers or also in a polymeric form, e.g. even also a co-polymers, as long as the allow the formation of a covalent bond to the substrate.

However, the vitrimers are not particularly restricted and can be suitable adapted to a specific substrate, e.g. specific functional groups in thermosets, thermoplastics, green bodies, (activated) metals, ceramics, composites, etc. Preferably, the at least one vitrimer has a temperature at which it turns into a viscoelastic fluid that is above its application temperature in a component that is obtained by the present method of joining described afterwards. An advantage of vitrimers therein is that the temperature difference of the joining temperature compared to the final service temperature usually does not have to be that big when joining to other vitrimers or sub-components via a covalent bond. For example, thermoplastics may have to be joined at 400°C for a service temperature of above 150°C (temperature difference of 200°C), which requires them to have a melting temperature and/or glass temperature above. For the vitrimer, in such instance a temperature difference of 50°C to 100°C may be suitable, so that a vitrimer having a temperature where it gets viscoelastic (also being called vitrimerisation temperature) of about 250°C is sufficient. In this regard, it is notable that vitrimers then also can be solved at 200-250°C for preparing a semi-finished product.

In the semi-finished product, the substrate is not particularly restricted as long as it is covalently bound to the at least one first vitrimer with a covalent bond, i.e. a chemical bond. The substrate can be of any material and of any shape. A suitable substrate can be e.g. in the form of a core or a layer. The core can be e.g. in the form of a core of a filament, fibre, or wire, etc. (i.e. at least open-ended on one end, a core of a particle - e.g. in the shape of a ball, an egg, in irregular shape - e.g. at least partially or even wholly covered by the at least one first vitrimer, etc. The substrate can also be a multilayer-material and/or comprise further components and/or additives besides the mentioned ones, i.e. the substrate can also be more complex according to certain embodiments.

According to certain embodiments, the substrate comprises a material chosen from a thermoplastic, a thermoset, a metal, a ceramic, a composite, a second vitrimer which is different from the first vitrimer, a green body, and mixtures thereof - e.g. also in the form of different layers, to which the at least one first vitrimer is covalently bound.

The thermoplastic, thermoset, metal, ceramic, composite, and green body comprised in the material of the substrate are not particularly restricted as long as they can form a covalent bond to the at least one first vitrimer. For this purpose, the material can be also e.g. be activated before forming the covalent bond, e.g. by thermal activation, irradiation, etc. According to certain embodiments, the substrate comprises a thermoplastic or a thermoset, or mixtures thereof, preferably a thermoset. Thus, hybrid materials in the semi-finished product with a thermoset and/or thermoplastic and a vitrimer are preferred in certain embodiments. In this regard it is also not excluded that the substrate comprises more than one thermoplastic, thermoset, metal, ceramic, composite, second vitrimer which is different from the first vitrimer, green body, and mixtures thereof, and/or additives for modifying the substrate, e.g. tougheners for superior cryogenic behavior, flame retardants, conductive agents, etc. Such additives are not particularly restricted and can be added in suitable amounts, depending on the intended purpose.

In the composite, usually fibers are used for reinforcement, which are not particularly restricted, and e.g. include glass fibers, carbon fibers, and/or metal fibers, which also can be recycled. Composite materials for all kinds of applications, e.g. aerospace applications, are usually made with reinforcement fibers and a polymeric matrix. The polymeric matrix is preferably either thermoset (TS) or thermoplastic (TP) with both advantages and disadvantages in terms of processing, thermal/mechanical properties, bonding/fusing and recycling, and these are not particularly restricted.

Use of a green body can be e.g. advantageous to finally cure the semi-finished product after joining in a method of the present invention. This way the formation of the joint may be eased, due to forming the semi-finished product along a shape of a sub-component, and curing can be carried out concurrently with the formation of a joint, at least partially. A production of vitrimer green state semi-finished products with a thermoset and/or thermoplastic not fully cured, e.g. by means of 3D printing, then can allow hot forming to a final geometry, making the use of a green body as a substrate very versatile.

The second vitrimer is not particularly restricted, as long as it differs from the first vitrimer in any property. For example, the second vitrimer can be even based on the same material as the first vitrimer, but e.g. differ in polymerization degree. Suitable vitrimers for the second and other vitrimers are those exemplified for the at least one first vitrimer.

According to certain embodiments, the substrate essentially consists of, i.e. to more than 90 wt.%, more than 95 wt.%, or more than 99 wt.% consists of, a material chosen from a thermoplastic, a thermoset, a metal, a ceramic, a composite, a second vitrimer which is different from the first vitrimer, a green body, and mixtures thereof, to which the at least one first vitrimer is covalently bound, or consists of a material chosen from a thermoplastic, a thermoset, a metal, a ceramic, a composite, a second vitrimer which is different from the first vitrimer, a green body, and mixtures thereof, to which the at least one first vitrimer is covalently bound.

According to certain embodiments, the semi-finished product is a fiber, e.g. a compound fiber, a core-shell structure, a tape, a foldcore, a green state part, or a structural element in a vehicle and/or a machine, e.g. in aeronautics, aviation and/or astronautics.

According to certain embodiments, the at least one first vitrimer is provided in the form of a layer, e.g. on a core, a fiber, a tape, a green body, etc., covering the substrate at least partially or fully. In such instances, the thickness of the layer is not particularly restricted. The thickness can e.g. range from several mm for macrosized semi-finished products to less than 0.1 mm for microsized semi-finished products.

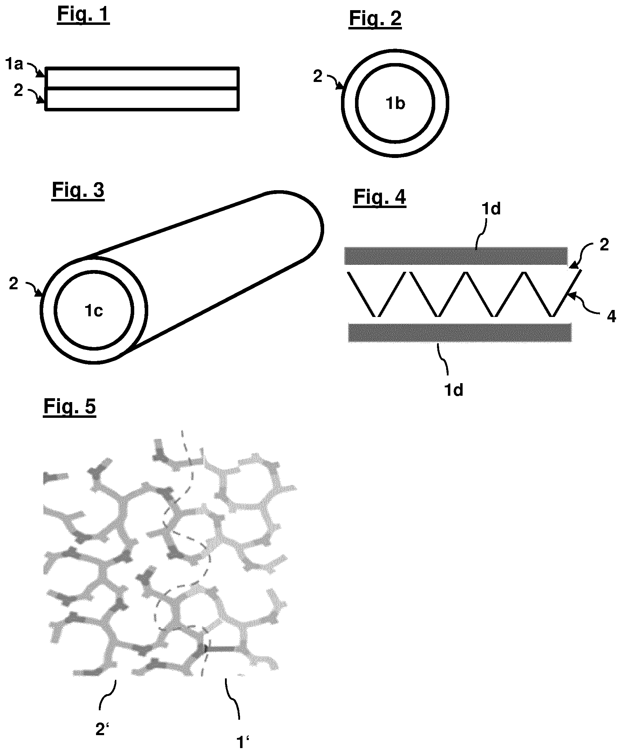

Exemplary forms of semi-finished products in line with the present subject-matter are shown schematically in Figures 1 to 4. Figure 1 therein shows an exemplary tape with a substrate 1a in sheet format and a layer of the first vitrimer 2. Figure 2 depicts an exemplary particle with a substrate core 1b, which can be in any shape beyond the shown circular (ball) shape, which is covered with a layer of the first vitrimer 2. In figure 3, a substrate 1c in the form of a filament is shown, which is covered on its surroundings with the first vitrimer 2. Figure 4 shows an exemplary self-adhesive foldcore with two first vitrimer 2 layers sandwiched between two substrate layers 1d, e.g. made of a thermoset, with an intermediate material as a sort of different substrate functioning as foldcore core 4, i.e. the foldcore core 4 can also be seen as substrate with two vitrimer layers bonded thereon for further joining to the substrate layers 1d, or the foldcore core 4 can be seen as a sub-component to which two semi-finished products are joined, showing that the term "substrate" is not particularly limited as long as there is a covalent bond to the at least one first vitrimer. An exemplary foldcore core can e.g. also be a composite. In all these examples, the at least one first vitrimer offers the possibility to be processible, even in case the substrate is hardened, rigid and/or cured, e.g. with subsequent application of heat, and thus can be used for bond formation and/or interdiffusion.

As shown, a ready-to-use semi-finished product thus typically consequently consists of an active part, the at least one first vitrimer, and a passive part, the substrate. As discussed above, the passive part can be e.g. a vitrimer itself, a - optionally cured - thermoset, a pre-consolidated thermoplastic, metal or ceramic, a green body, etc., or a mixture thereof. The active part is the at least one first vitrimer.

The basic principle of the basis for the semi-finished product, the covalent bond between the at least one first vitrimer and the substrate, here a thermoset, is schematically shown in Figure 5, where the substrate polymer 1' is bound to vitrimer molecule(s) 2 via a covalent bond, established at the broken line. The semi-finished product thus is a hybrid, comprising the classical substrate, e.g. a thermoset or thermoplastic, and a surface of the vitrimer which can be activated or is active for joining. Possible exemplary monomers for such covalent bonding will be exemplary shown in the examples, although binding of vitrimers via functional groups, e.g. epoxy groups, amine functions, hydroxyl groups, etc., to functional groups of thermosets, thermoplastics, activated metal, ceramics, etc., like hydroxyl groups, acid functions, etc. are readily clear to the skilled person familiar with the formation of co-polymers.

Particularly using advantages of such semi-finished products specifically exploitable at the end-of-life phase, benefits for manufacturing processes such as reshaping and joining can be addressed with vitrimers.

Thus, in a further aspect, disclosed is a method of joining, comprising:
- providing a semi-finished product of the present invention;
- bringing the semi-finished product in contact with a sub-component; and
- joining the semi-finished product with the sub-component.

Regarding the semi-finished product, reference is made to the description above and below for conciseness. The provision thereof is not particularly restricted.

Also the step of bringing the semi-finished product in contact with a sub-component is not particularly restricted. The sub-component is not particularly restricted and can be any part used in a component. It is also not excluded that the sub-component is a, e.g. further, semi-finished product of the invention. According to certain embodiments, the sub-component is a semi-finished product. Preferable, the sub-component comprises a surface to which the at least one first vitrimer, e.g. after activation through heating, e.g. melting, can be bonded, preferably covalently, and/or with which the at least one first vitrimer can mix and interdiffuse, so that a bond can be formed by subsequent curing/hardening. With regard to the component, it is not excluded that a component provided by a method of joining in line with the present invention also contains a vitrimer, i.e. that the component can then again also function as a semi-finished product, wherein this component has then a substrate with a bond of at least one vitrimer. Thus, then a component can also be joined again with another sub-component, e.g. a semi-finished product in line with the present disclosure, and so on.

The step of joining the semi-finished product with the sub-component is not particularly restricted, and joining can also depend on the nature of the sub-component or at least the surface thereof. For example, joining can be done by intermixing, e.g. with a thermoset resin and/or a thermoplastic before hardening/curing, and/or with a further vitrimer that can be identical or different. Alternatively or in addition, it is also possible to form a bond between the vitrimer and the surface of the sub-component, e.g. optionally after activation of at least a part of the surface of the sub-component.

The advantage of joining the semi-finished product with the sub-component is that the bond between the substrate of the semi-finished product and the sub-component through the at least one first vitrimer, e.g. through chemical bonding and/or intermixing, can at a later time be again debonded, e.g. by sufficient heating of the at least one vitrimer, making an easy recycling of the sub-component and at least the substrate of the semi-finished product possible. Also, repair of the joint is facilitated, as vitrimers can be easily replaced or are even self-repairing.

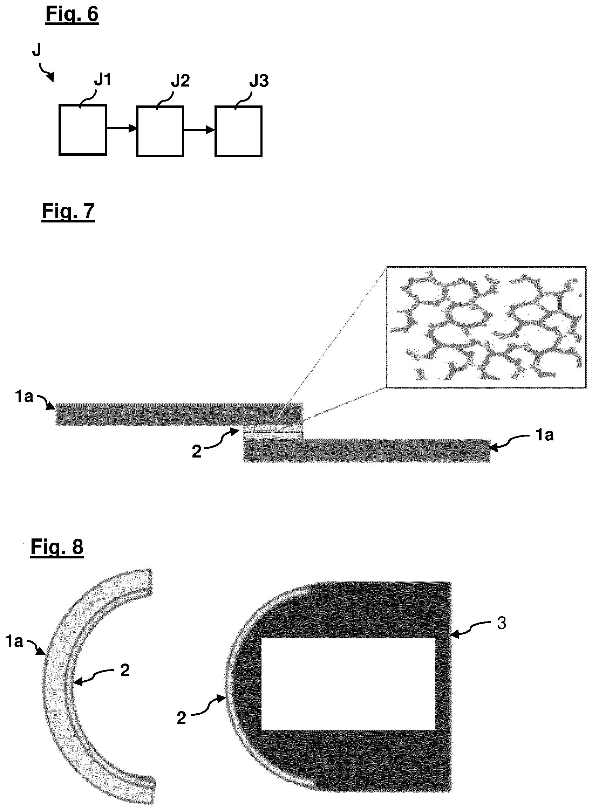

A method of joining J is schematically shown in Figure 6. Following a step J1 of providing a semi-finished product of the invention follows a step J2 of bringing the semi-finished product in contact with a sub-component, and a step J3 of joining the semi-finished product with the sub-component.

According to certain embodiments, the sub-component comprises a third vitrimer (i.e. the sub-component can also be a sort of semi-finished product in case there is a covalent bond between a "substrate" of the sub-component and the third vitrimer) which can be the same as the first vitrimer or is different, wherein the first vitrimer of the semi-finished product is at least partially brought into contact with the third vitrimer, wherein joining comprises interdiffusion of the first and third vitrimer and/or forming a bond between the first and third vitrimer. Using two vitrimers, joint formation can be carried out easier and localization of the joint is facilitated by preparing surfaces with the at least one first vitrimer and the third vitrimer accordingly. Thus, selective joint formation is possible, and the overall amount of vitrimer for joint formation can be reduced. This way, also formation of specific structures, e.g. shims, is possible. For example, shims or adhesion tolerance compensation layers of vitrimers can be 3D printed on specific points of a substrate, e.g. using fused layer modeling/fused deposition modeling (FLM/FDM). This enables fast curing of a shim and optional good adhesion to the vitrimer part surface, which otherwise is tedious.

Such assembly with shim formation is shown exemplarily in Figure 7, here with a sub-component being identical to the semi-finished product, i.e. the sub-component also being a semi-finished product in line with the present invention. The sub-component and the semi-finished product both comprise a substrate 1a with a layer of a first vitrimer 2 on top, selectively not covering the whole substrate. By bringing the two first vitrimers 2 into contact, a shim can be formed, and by curing the two first vitrimer layers a joint is formed. This joint thus can replace a structural adhesive joint using common adhesives.

A further example of a macroscopic assembly is shown in Figure 8, where a semi-finished product, e.g. a metal erosion protection, with a substrate 1a (here being quite complex, and thus could also be considered a sub-component or even component) as protection with a layer of first vitrimer 2 is brought into contact with the sub-component 3, e.g. a blade composition made of a metal (here being also quite complex), comprising also a vitrimer layer, in this example also comprising the first vitrimer 2, although other vitrimers may be usable as well.

Apart of macroscopic assemblies, also assemblies on the mesoscale and microscale are possible with the present method of joining, these also being possible as hybrid assemblies. For example, all common methods of 3D printing are also suitable in the present method of joining, e.g. composite 3D printing, atomic layer manufacturing, material/filament extrusion (FLM/FDM (fused layer modeling/fused deposition modeling), etc.), e.g. with filaments, etc. as semi-finished product, powder bed methods (PB using laser, binder jetting/high speed sintering (HSS), powder bed fusing processes, etc.) using e.g. particles as semi-finished product, and layer object manufacturing (LOM), as well as other methods of rapid prototyping. In all these methods, the use of vitrimers covalently bound to a substrate is beneficial. On the meso- to microscale, also methods like automated fiber placement (AFP) and automated tape laying (ATL), etc. are readily available, e.g. with filaments and/or tapes.

For example, FLM/FDM with vitrimers can generate high performance parts without weak interlayers, thanks to covalent bond formation in the interface, which can be issues e.g. with PEEK. Furthermore, only partly heating of a vitrimer filament at the surface, only creating a viscoelastic state at e.g. a part thereof, can speed-up the process and reduce the energy consumption. For these methods, the use of thermoset and/or thermoplastic substrates is particularly suitable, and the vitrimer can function as a sort of adhesive.

In LOM, the vitrimer can function as "adhesive in between layers of e.g. thermoplastic, thermoset and/or metal materials and/or based on vitrimer matrix composites.

Furthermore, particles, films or other elements can also be used to define a geometry of dry fiber preforms prior to resin infiltration, wherein the elements can also be composite-vitrimer-hybrids themselves. Advantages thereof comprise infinite shelf life and the unlimited number of assembly steps of activated sub-preforms. Moreover, the preforms can also be equipped with an active bondable surface using vitrimer. The "binder" then becomes part of the matrix in the final part, without becoming a heterogeneous polymer matrix mix with all well-known disadvantages. For example, a powder can be introduced, which normally would be at risk of being washed out when introducing a matrix resin. Here, the vitrimer can be used as a sort of binder when present on the fibers for the particles introduced, which e.g. can also be at least partially covered with vitrimer.

According to certain embodiments, bringing the semi-finished product in contact with the sub-component comprises bringing the first vitrimer in contact with an intermediate material and the intermediate material in contact with the sub-component, wherein joining the semi-finished product with the sub-component comprises joining the intermediate material with the semi-finished product and the sub-component. Using such intermediate material, recycling with the vitrimers on the sub-component and the semi-finished product may be facilitated, the intermediate material e.g. also being a vitrimer that can be removed by having a lower temperature where it becomes viscoelastic. This intermediate material may then also function as e.g. shim. According to certain embodiments, the intermediate material is a fourth vitrimer, which can be the same as the first and/or third vitrimer or be different, e.g. in the form of a shim. The fourth vitrimer can also be e.g. uncured vitrimer, which then can be bonded to the first vitrimer, as discussed above. Thus, this method can be used instead of solvent-based gluing.

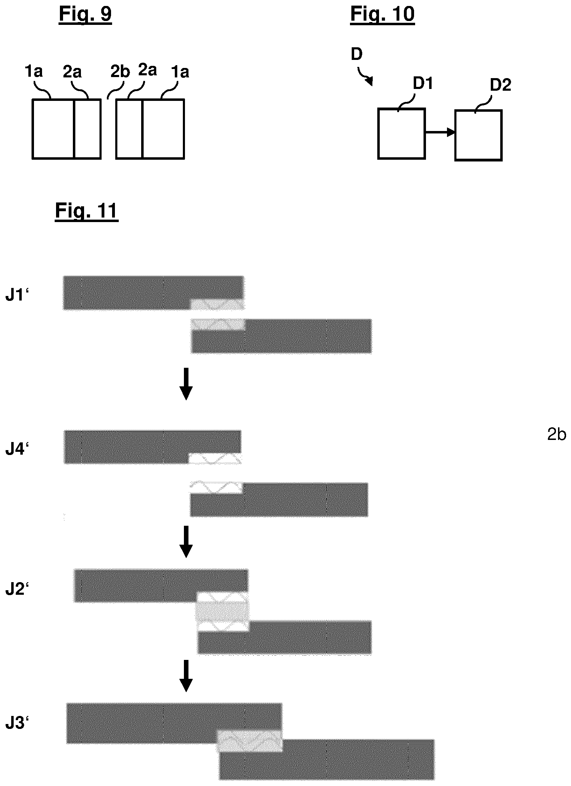

Fig. 9 shows schematically such method, wherein two substrates 1a with semicured or cured vitrimer 2a can be bonded via uncured vitrimer 2b and subsequent curing. The uncured vitrimer 2b can in this case also e.g. interdiffuse with the semi-finished vitrimer 2a, further strengthening the bond.

Further disclosed is a component, produced by a method of joining of the invention. The component particularly is characterized by a joint that can be easily debonded, thus facilitating recycling of parts after end-of-life of the component.

In addition, the present invention relates to a method of debonding such a component, comprising:
- heating the first vitrimer to at least partially a viscoelastic fluid and/or dissolving the first vitrimer at least partially; and
- removing the sub-component from the component.

The heating step and/or dissolving step is not particularly restricted, as well as also not the removing step, as after conversion of the first vitrimer in a viscoelastic state or dissolving it, the sub-component and the substrate of the semi-finished product can be easily pulled apart, with the vitrimer being either removed or maintained in viscoelastic form for later reuse after solidification. Dissolving the first vitrimer can be carried out using a suitable solvent that is not particularly restricted and can be adapted to the first vitrimer.

Such method of debonding D is shown schematically in Figure 10, wherein a step D1 of heating the first vitrimer to at least partially a viscoelastic fluid and/or dissolving the first vitrimer at least partially is followed by a step D2 of removing the sub-component from the component.

In the method of joining, as well as the method of debonding, the several steps are particularly carried out in the given order. While it is possible that further steps are carried out in between, e.g. curing, treatment or other steps of sub-component and/or substrate, etc., this is not necessary.

According to certain embodiments, the component in a method of joining of the present invention comprises a third vitrimer, wherein the first and third vitrimer are comprised in a first and third composite structure comprising fibers, the step of joining comprising bringing the first vitrimer of the semi-finished product at least partially into contact with the third vitrimer, removing the first and third vitrimer from the first and third composite structure at least partially or even substantially fully or fully, filling the first and third composite structure with a resin, and curing the resin. The third vitrimer can be the same as the third vitrimer or different.

The steps are not particularly restricted, and the bringing into contact can be carried out as described before. Removing of the first and third vitrimer at least partially can be suitably carried out, e.g. by bringing them into a viscoelastic state and at least partially removing them, and/or using a solvent that is not particularly restricted. Filling of the first and third composite structure with a resin can e.g. be done by a suitable injection method, by pouring, etc., using pressure and/or heat, if applicable.

The resin is not particularly restricted in such method and can be e.g. a thermoset, a thermoplastic, or a vitrimer. This method allows formation of a different bond between the substrate of the semi-finished product and the sub-component, thus enabling bonds suitable to a specific application, e.g. with regard to rigidity, hardness, etc.

Disclosed is also a component produced by such method.

Also, in such component, a debonding can be carried out, particularly if the resin is a thermoplastic and/or a further, e.g. fifth, vitrimer, which can be the same as one of the first to fourth vitrimers, or different.

Furthermore, the present invention relates to a (second) method of joining, comprising:
- providing a first semi-finished product, comprising a first substrate and at least one first vitrimer covalently bound to the first substrate, and a second semi-finished product, comprising a second substrate and at least one third vitrimer, preferably covalently bound to the second substrate, wherein the first and the second semi-finished product can be the same or different;
- removing the first and third vitrimer from the first and second semi-finished product at least partially;
- bringing the first semi-finished product in contact with the second semi-finished product at least in the region where the first and third vitrimer were removed from the first and second semi-finished product at least partially;
- filling the region where the first and third vitrimer are removed from the first and second semi-finished product at least partially with a resin; and
- curing the resin.

The first semi-finished product thus is the semi-finished product of the invention. The second semi-finished product can be also a semi-finished product of the invention, but also can be different, as the at least one third vitrimer does not have to be covalently bonded, but preferably is. The second substrate can be the same as the substrate described of the present semi-finished product, and the first substrate is the same. The second semi-finished product preferably is configured as the semi-finished product of the invention, and for such instance reference is made to the description before. Preferably, the at least one first vitrimer and the at least one third vitrimer are comprised in a composite. In any cases where the vitrimer is comprised in a composite, composite fibers can also be extended from the substrate, or be different.

The further steps are not particularly restricted. Removing of the first and third vitrimer at least partially can be suitably carried out, e.g. by bringing them into a viscoelastic state and at least partially removing them, and/or using a solvent that is not particularly restricted. The bringing into contact can be carried out as described before with regard to the first method of joining. Filling the region where the first and third vitrimer are removed from the first and second semi-finished product at least partially with a resin can e.g. be done by a suitable injection method, by pouring, etc., using pressure and/or heat, if applicable.

The resin is not particularly restricted in such method and can be e.g. a thermoset, a thermoplastic, or a vitrimer. This method allows formation of a different bond between the substrate of the semi-finished product and the sub-component, thus enabling bonds suitable to a specific application, e.g. with regard to rigidity, hardness, etc.

Such second method of joining is shown schematically in Figure 11, wherein step J1' is a step of providing a first semi-finished product, comprising a first substrate and at least one first vitrimer covalently bound to the first substrate, and a second semi-finished product, comprising a second substrate and at least one third vitrimer. As shown in this figure, the first and second semi-finished product can be identical, but can be different, as described before. For example, the first and second substrate can be a thermoset, and the first and third vitrimer can be the same. Step J4' is a step of removing the first and third vitrimer from the first and second semi-finished product at least partially, or even substantially wholly or wholly, e.g. by heating or using a solvent, and step J2' is a step of bringing the first semi-finished product in contact with the second semi-finished product at least in the region where the first and third vitrimer were removed from the first and second semi-finished product at least partially. As shown in the figure as an exemplary embodiment, the resulting partly solid partly dry fibre composite is placed dry fibre to dry fibre surface with a resin film in between. Afterwards, step J3' is a step of filling the region where the first and third vitrimer are removed from the first and second semi-finished product at least partially with a resin, e.g. by pressure and/or heat, enabling penetration of the empty region, e.g. here the dry fibre parts., whereafter the resin is cured.

Disclosed is also a component produced by such method.

Also, in such component, a debonding can be carried out, particularly if the resin is a thermoplastic and/or a further, e.g. fifth, vitrimer, which can be the same as one of the first to fourth vitrimers, or different.

With the present method of joining, numerous components can be made in many fields of technology, due to the possibility of joining on macro-, meso-, and microscale. Components to be produced include components in vehicles and/or machines, e.g. in aeronautics, aviation and/or astronautics, etc. However, also parts in automotive technology, production technology, nautic applications, and industrial machinery and/or process engineering are possible.

According to certain embodiments of a component of the invention, the component is a component of an airplane, a rocket, a satellite, a helicopter, or is a multilayer structure and/or a structure produced by rapid prototyping. However, numerous other components are possible.

Components that can be produced include e.g. a bracket fixed to a component, a rotor blade of a helicopter, a hydrogen tank, e.g. a cryo tank, for e.g. rockets (with low service temperature), a droop flap or a cabin patch of an airplane, a blade of an airplane (service temperature of e.g. about 80-90°C) but also smaller parts made by rapid prototyping technologies, e.g. smaller cabin parts. Furthermore, also functional elements like erosion protection, etc. can be joined. The components can therein contain additives like flame retardants, toughening agents, etc., which are not limited. Considering that in the semi-finished product and/or sub-component - if applicable - the amount of vitrimer can be low compared to the whole part, e.g. between 5 and 20 wt.% and/or between 5 and 20 vol.%, based on the whole part, also higher service temperatures may be feasible if the joint can be sufficiently protected from excessive heating, e.g. using other layers in the component with higher temperature tolerance, e.g. made of suitable thermosets and/or thermoplasts. Thus, the joint is also very versatile.

The components thereby profit from strong bonds with the vitrimers, using intermixing and/or covalent bonds. Particularly, the covalent bond formation of the active parts across the joining interface firmly connects the joining parts on molecular level. This eliminates the diffusion or curing time needed compared to present thermoplastic and thermoset joining and certification reservations with regard to the performance of conventional adhesive joints, as they are for example used for thermosets and/or metals.

The above embodiments can be combined arbitrarily, if appropriate. Further possible embodiments and implementations of the invention comprise also combinations of features not explicitly mentioned in the foregoing or in the following with regard to the Examples of the invention. Particularly, a person skilled in the art will also add individual aspects as improvements or additions to the respective basic form of the invention.

### Examples

The present invention will now be described in detail with reference to several examples thereof. However, these examples are illustrative and do not limit the scope of the invention.

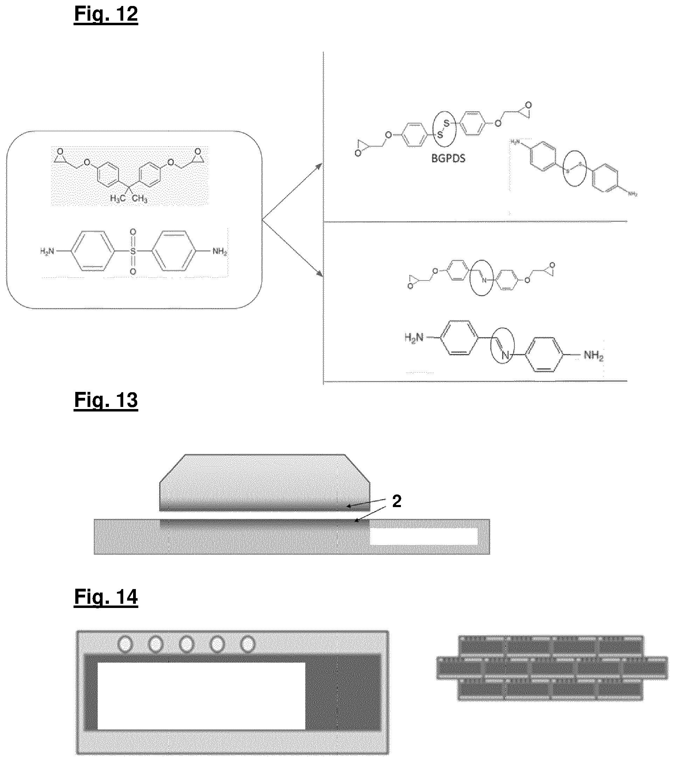

Figure 12 shows exemplary vitrimer monomers on the right side and their "classical" monomer counterparts in thermosets on the left side, showing the possibility to form a covalent bond between such monomers and even to "copolymerize" them. The thermoset can be cured in a conventional way, at least partially, and remaining functional groups on the surface can be used to bind the vitrimer to form an active vitrimer surface for later use in a joining method.

Such vitrimers are commercially available, e.g. 1,2-bis(4-(oxiran-2-ylmethoxy)phenyl)disulfane from Alfa Chemical or BLD Pharm, bis-(4-aminophenyl)-disulfid from Sigma Aldrich, and further vitrimers or their base substances from other chemical suppliers like Sigma Aldrich (see e.g. https://www.sigmaaldrich.com/DE/de/tech-docs/paper/1404646).

Figures 13 and 14 show exemplary components that can be produced using such vitrimers.

Figure 13 shows a bracket, wherein joining is carried out using two surfaces with a first vitrimer 2. Conventionally, the installation of attachments to the airframe structure is a costly process involving surface preparation, bonding and/or sealing and frequently fastening. The use of vitrimers as bonding element between the bracket and the structure of the component enables a co-bonding or even a co-curing of the bracket. The application of the vitrimer at both joint counterparts creates a joining possibility not demanding surface preparation and free of the limitations imposed by the shelf life of any adhesive. In the figure, both the bracket on top and the component on the bottom can exemplarily be made of a suitable thermoplastic and/or thermoset.

Figure 14 shows a co-cured structure produced using an automated fiber placement on the right, using a functional layer, e.g. a composite, e.g. prepreg, which is surrounded by a vitrimer layer having e.g. additives for toughening, flame protection, conductivity, spacers, etc., or even low cross-linked vitrimers therein, as shown on the left. This can then enable mesoscale joining of e.g. tapes with different functionalities. The functional layer therein serves as substrate and can e.g. comprise a thermoset and/or thermoplastic, composite, etc., for bonding the vitrimer.

By exploiting vitrimers, more specifically the hybrids of those, joining can be produced in
- macroscopic joining of parts and elements
- mesoscale joining of tapes (e.g. AFP) and
- microscale joining of filaments and/or particles (e.g. 3D printing).

This enables the following advantages:
- reliable & certifiable bonding
- debonding on demand
- cost reduction
- cost efficient repair processes by debonding of parts or products
- high rate production capability
- recycling rate improvements
- overall reduced environmental footprint

### LIST OF REFERENCE SIGNS

1a substrate
1b substrate core
1c substrate
1d substrate layer
1' substrate polymer
2 first vitrimer
2a cured vitrimer
2b uncured vitrimer
2' vitrimer molecule(s)
3 sub-component
4 foldcore core
D method of debonding
D1 heating the first vitrimer to at least partially a viscoelastic fluid and/or dissolving the first vitrimer at least partially
D2 removing the sub-component from the component
J method of joining
J1 providing a semi-finished product of the invention
J2 bringing the semi-finished product in contact with a sub-component
J3 joining the semi-finished product with the sub-component
J1' providing a first semi-finished product, comprising a first substrate and at least one first vitrimer covalently bound to the first substrate, and a second semi-finished product, comprising a second substrate and at least one third vitrimer
J2' bringing the first semi-finished product in contact with the second semi-finished product at least in the region where the first and third vitrimer were removed from the first and second semi-finished product at least partially
J3' filling the region where the first and third vitrimer are removed from the first and second semi-finished product at least partially with a resin, and curing the resin
J4' removing the first and third vitrimer from the first and second semi-finished product at least partially

## Claims

1. A semi-finished product, comprising a substrate and at least one first vitrimer covalently bound to the substrate.

2. The semi-finished product of claim 1, wherein the substrate comprises a material chosen from a thermoplastic, a thermoset, a metal, a ceramic, a composite, a second vitrimer which is different from the first vitrimer, a green body, and mixtures thereof, to which the at least one first vitrimer is covalently bound.

3. The semi-finished product of claim 1 or 2, wherein the substrate is in the form of a core or a layer.

4. The semi-finished product of any one of claims 1 to 3, wherein the semi-finished product is a compound fiber, a core-shell structure, a tape, a foldcore, a green state part, or a structural element in a vehicle and/or a machine, e.g. in aeronautics, aviation and/or astronautics.

5. A method of joining, comprising:
- providing a semi-finished product according to any one of claims 1 to 4;
- bringing the semi-finished product in contact with a sub-component; and
- joining the semi-finished product with the sub-component.

6. The method of claim 5, wherein the sub-component comprises a third vitrimer which can be the same as the first vitrimer or is different, wherein the first vitrimer of the semi-finished product is at least partially brought into contact with the third vitrimer, wherein joining comprises interdiffusion of the first and third vitrimer and/or forming a bond between the first and third vitrimer.

7. The method of claim 5 or 6, wherein bringing the semi-finished product in contact with the sub-component comprises bringing the first vitrimer in contact with an intermediate material and the intermediate material in contact with the sub-component, wherein joining the semi-finished product with the sub-component comprises joining the intermediate material with the semi-finished product and the sub-component.

8. The method of claim 7, wherein the intermediate material is a fourth vitrimer, which can be the same as the first and/or third vitrimer or be different, e.g. in the form of a shim.

9. A component, produced by the method of any one of claims 5 to 8.

10. A method of debonding a component of claim 9, comprising:
- heating the first vitrimer to at least partially a viscoelastic fluid and/or dissolving the first vitrimer at least partially; and
- removing the sub-component from the component.

11. The method of claim 5, wherein the component comprises a third vitrimer, wherein the first and third vitrimer are comprised in a first and third composite structure comprising fibers, the step of joining comprising bringing the first vitrimer of the semi-finished product at least partially into contact with the third vitrimer, removing the first and third vitrimer from the first and third composite structure at least partially, filling the first and third composite structure with a resin, and curing the resin.

12. A component, produced by the method of claim 11.

13. A method of joining, comprising:
- providing a first semi-finished product, comprising a first substrate and at least one first vitrimer covalently bound to the first substrate, and a second semi-finished product, comprising a second substrate and at least one third vitrimer, preferably covalently bound to the second substrate, wherein the first and the second semi-finished product can be the same or different;
- removing the first and third vitrimer from the first and second semi-finished product at least partially;
- bringing the first semi-finished product in contact with the second semi-finished product at least in the region where the first and third vitrimer were removed from the first and second semi-finished product at least partially;
- filling the region where the first and third vitrimer are removed from the first and second semi-finished product at least partially with a resin; and
- curing the resin.

14. A component, produced by the method of claim 13.

15. The component of claim 9 or 12 or 14, wherein the component is a component of an airplane, a rocket, a satellite, a helicopter, or is a multilayer structure and/or a structure produced by rapid prototyping.
